# DEMANDE DE BREVET EUROPEEN

(11) **EP 0 965 478 A1**
(43) Date de publication de la demande: **22.12.1999**
(21) Numéro de dépôt: 99401488.4
(22) Date de dépôt: 17.06.1999
(51) Int. Cl.: B60N 2/36, B60N 2/22

(54) **Siège arrière réglable en position longitudinale dans un habitacle de véhicule automobile**

(30) Priorité: 17.06.1998 FR 9807619
(71) Demandeur: AUTOMOBILES PEUGEOT, 75116 Paris (FR); AUTOMOBILES CITROEN, 92200 Neuilly-sur-Seine (FR)
(72) Inventeur: Vanhulle, Jean-Philippe, 95480 Pierrelaye (FR)
(74) Mandataire: Seytre, Françoise

(57) **Abrégé**

Ce siège arrière réglable en position longitudinale dans un habitacle automobile, le siège (1) comportant une assise (2) et un dossier (3) articulé autour d'un axe transversal (4) sur cette assise (2), l'assise (2) étant montée de manière amovible sur des glissières (8) fixées au plancher (9), est caractérisé en ce qu'il comporte d'une part un moyen de verrouillage (16) du haut de dossier (3) sur l'un des côtés de caisse (15) qui est désarmable sous l'action d'un levier de commande (17) porté par le siège (1), entre une position d'immobilisation du siège et escamotée de réglage en position longitudinale de celui-ci et d'autre part un moyen de verrouillage (19) de l'articulation (4) du dossier (3) par rapport à l'assise (2) qui est désarmable sous l'action d'un loquet (18) porté par le dossier, entre une position active d'immobilisation du siège et de l'articulation et escamotée de rabattement de ce dossier (3) sur l'assise (2).

## Description

La présente invention concerne un siège arrière réglable en position longitudinale dans un habitacle de véhicule automobile.

On connaît déjà dans l'état de la technique, des sièges de ce type dans lesquels le siège comporte des pieds de support disposés par exemple à l'avant et à l'arrière de l'assise du siège et qui sont destinés à prendre appui sur des doigts ou anneaux portés par des éléments mobiles d'une glissière solidaire du plancher du véhicule.

Ce type de siège trouve son application principalement dans les véhicules dits "monospaces" et sont par conséquent conçu avec des armatures pouvant résister, par exemple, aux chocs bagages en cas d'accident qui s'avèrent par conséquent relativement coûteuse.

Le but de l'invention est de proposer un siège arrière réglable en position longitudinale dans un habitacle qui soit économique, c'est-à-dire réalisé avec des armatures peu coûteuses et qui puisse résister aux chocs cités ci-dessus.

A cet effet, la présente invention a pour objet un siège arrière réglable en position longitudinale dans un habitacle automobile, le siège comportant une assise et un dossier articulé autour d'un axe transversal sur cette assise, l'assise étant montée de manière amovible sur des glissières fixées au plancher, caractérisé en ce qu'il comporte d'une part un moyen de verrouillage du haut de dossier sur l'un des côtés de caisse qui est désarmable sous l'action d'un levier de commande porté par le siège, entre une position d'immobilisation du siège et escamotée de réglage en position longitudinale de celui-ci et d'autre part un moyen de verrouillage de l'articulation du dossier par rapport à l'assise qui est désarmable sous l'action d'un loquet porté par le dossier, entre une position active d'immobilisation du siège et de l'articulation et escamotée de rabattement de ce dossier sur l'assise.

Suivant quelques dispositions intéressantes de l'invention:
- les moyens de verrouillage du haut de dossier se verrouillent automatiquement sur l'une des positions voisines à la position d'origine lors du déplacement longitudinal de l'assise,
- le moyen de verrouillage de l'articulation est constitué d'un crochet articulé autour d'un axe transversal situé à la base du dossier et solidaire de ce dernier, qui est conformé pour coopérer avec un axe transversal solidaire de l'armature de l'assise et situé au voisinage de l'axe d'articulation,
- le moyen de verrouillage du haut de dossier est constitué d'un doigt transversal monté mobile en translation horizontale dans la partie supérieure de l'armature du dossier qui est apte à s'engager dans des orifices régulièrement répartis suivant un axe longitudinal, sur un profil fixé sur l'un des côtés de caisse,
- le doigt est rendu solidaire du loquet par l'intermédiaire d'un axe traversant ledit doigt perpendiculairement à l'axe longitudinal de ce dernier qui coopère avec ledit loquet,
- le moyen de verrouillage du haut de dossier est pourvu d'une chape destinée à enserrer le profil en position d'immobilisation du siège,
- le loquet est articulé sur le dossier et est relié respectivement par un câble au levier de commande et au crochet de verrouillage de l'articulation du dossier sur l'assise,
- l'assise comporte d'une part, deux pieds de support arrière qui sont conformés pour se fixer sur un doigt ou anneau solidaire d'un élément mobile d'une glissière fixée au plancher, et d'autre part, porte, sous sa partie avant, au moins une partie saillante articulée sur un axe transversal porté par une extrémité d'une biellette articulée sur un axe transversal porté par une chape solidaire du plancher,
- les glissières sont pourvues d'un mécanisme d'immobilisation de l'élément mobile par rapport à l'élément fixe de la glissière qui est éclipsable lors de l'engagement des pieds de support de l'assise sur le doigt ou anneau,

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue schématique de côté d'un siège arrière selon la présente invention, en position extrême arrière,
- la figure 2 est une vue similaire à la figure 1, représentée en position extrême avant,
- la figure 3 est une vue schématique de côté représentant le siège selon la présente invention, en position dossier rabattu,
- la figure 4 représente en vue de côté le siège selon l'invention en position assise rabattue vers les sièges,
- la figure 5 est une vue à plus grande échelle de la fixation du haut de dossier, et
- la figure 6 est une vue en coupe suivant la ligne VI-VI de la figure 2, illustrant le mécanisme de verrouillage de haut de dossier de siège.

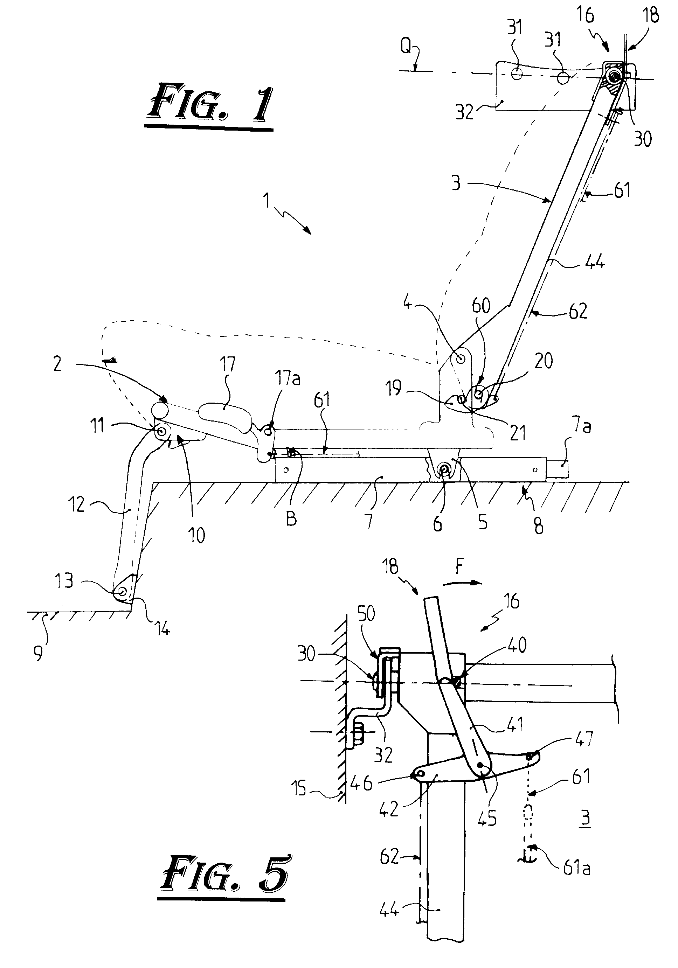

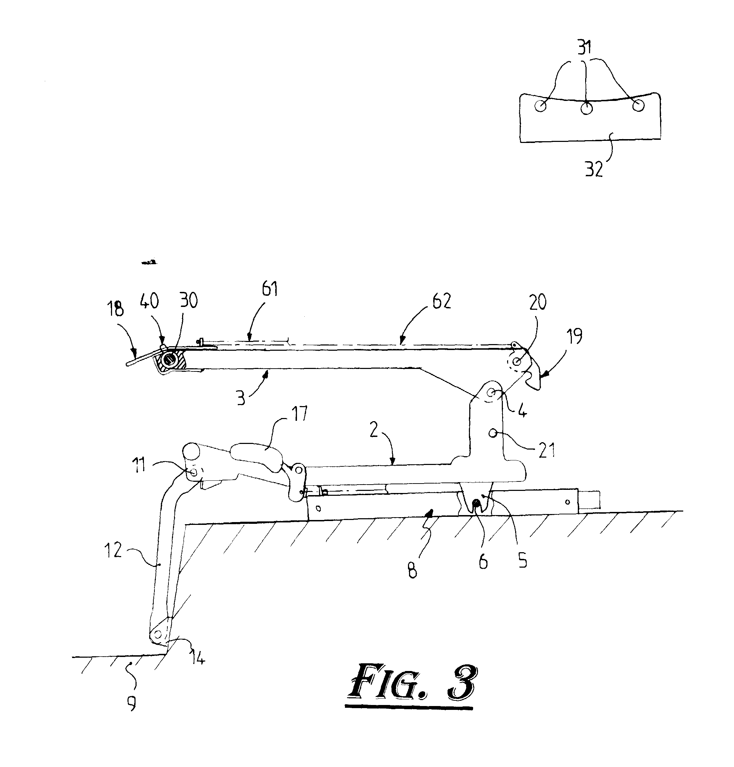

On a représenté aux figures 1 à 4, un siège arrière réglable en position longitudinale dans un habitacle automobile, dans différentes positions.

Ce siège 1 comporte une assise 2 et un dossier 3 articulé sur cette assise 2 autour d'un axe transversal 4, dont on a représenté les armatures, et sur quelques figures en silhouette la matelassure .

Dans l'exemple de réalisation représenté sur ces figures, l'assise 2 comporte deux pieds de support arrière 5 qui sont conformés pour se fixer sur un doigt ou anneau 6 solidaire d'un élément mobile 7 d'une glissière 8 fixée au plancher 9. Elle porte, sous sa partie avant, au moins une partie saillante 10 articulée sur un axe transversal 11 porté par une extrémité d'une biellette 12 articulée sur un axe transversal 13 porté par une chape 14 solidaire du plancher 9.

On notera qu'il est possible de prévoir une ou deux biellettes 12 disposées au voisinage de la partie médiane de l'assise, ou bien deux biellettes 12 placées chacune à une extrémité de cette assise.

Le dossier 3 est articulé à sa base autour de l'axe transversal 4 solidaire de l'armature de l'assise 2. En position normale d'utilisation, ce dossier 3 est verrouiller, à sa partie supérieure, sur l'une des parois latérales 15 des côtés de caisse du véhicule automobile par l'intermédiaire d'un moyen de verrouillage 16.

Selon la présente invention, ce moyen de verrouillage 16 en haut de dossier 3 permet d'immobiliser le siège 1 longitudinalement. Ce moyen de verrouillage 16 est désarmable d'une part sous l'action d'un levier de commande 17 porté par l'assise du siège 1, entre une position active d'immobilisation du siège et escamotée de réglage en position de celui-ci, et d'autre part sous l'action d'un loquet 18 porté par le dossier 3, entre une position active d'immobilisation du siège 1, et escamotée de rabattement du dossier 3 sur l'assise 2.

Un moyen de verrouillage de l'articulation 4 du dossier 3 par rapport à l'assise 2 est également prévu sur le siège 1. Ce moyen de verrouillage de l'articulation est constitué d'un crochet 19 articulé autour d'un axe transversal 20 situé à la base du dossier 3 et solidaire de ce dernier, qui est conformé pour coopérer avec un axe transversal 21 solidaire de l'armature de l'assise 2 et situé au voisinage de l'axe d'articulation 4.

Le moyen de verrouillage 16 du haut de dossier 3 est constitué d'un doigt transversal 30 monté mobile en translation horizontale dans la partie supérieure de l'armature du dossier 3 qui est apte à s'engager dans des orifices 31 régulièrement répartis suivant un axe longitudinal Q, en considérant par exemple la figure 1, sur un profil 32 fixé sur l'un des côtés de caisse, par l'intermédiaire d'un moyen de visserie.

Le doigt 30 est avantageusement monté mobile en translation par l'intermédiaire d'un ressort de rappel 33, du type ressort à boudin dont l'une des extrémités libres de ce ressort prend appui sur l'une des extrémités 30a du doigt 30 et dont l'autre extrémité libre du ressort 33 prend appui sur une paroi verticale 34 solidaire de l'armature du dossier 3, comme visible plus clairement sur la figure 6.

Le doigt 30 est rendu solidaire du loquet 18 par l'intermédiaire d'un axe 40 traversant ledit doigt 30 perpendiculairement à l'axe longitudinal de ce dernier qui coopère avec ledit loquet 18.

Le loquet 18 est constitué, dans le mode de réalisation représenté, de deux biellettes 41, 42 solidaires l'une de l'autre et présentant assemblées la forme générale d'un "T" inversé. Ce loquet 18 est articulé sur la face arrière 44 du dossier 3 autour d'un axe 45. La biellette 41 formant la branche centrale du "T" est par exemple en contact, comme représenté sur les figures, avec l'axe transversal 40 reliant le doigt 30, tandis que les extrémités 46 et 47 de l'autre biellette 42, visible à la figure 5, sont reliées par l'intermédiaire, par exemple, d'un câble 61 et 62 respectivement au levier de commande 17 et au crochet 19 de verrouillage de l'articulation 4.

Le moyen de verrouillage 16 du haut de dossier 3 comporte également une chape 50, comme visible à la figure 6, qui est destinée à enserrer le profil 32 en position d'immobilisation du siège 1. Cette chape 50 est destinée à renforcer l'armature du dossier afin de résister aux chocs bagages lors d'un accident.

De manière avantageuse, la chape 50 est pourvue au niveau de son contact avec le bord supérieur 51 du profil 32 d'une pièce de guidage 52 réalisée dans un matériau présentant des caractéristiques de glissement, par exemple en Téflon®, de manière à éviter les frottements métal contre métal de la chape 50 contre le profil 32, lors du déplacement longitudinal de l'assise 2.

Un ressort de rappel 60 est enroulé autour de l'axe 20 dont les extrémités libres dudit ressort sont fixées sur l'armature du dossier 3 de manière à rappeler automatiquement le crochet 19 dans sa position de verrouillage.

Le levier de commande 17 est constitué d'une poignée articulée sur l'assise autour d'un axe transversal et qui est reliée au moyen de verrouillage du haut de dossier par l'intermédiaire d'un câble sous gaine 61. On notera que de manière connue deux butées B de la gaine 61a sont solidaires respectivement de l'armature de l'assise et de l'armature du dossier, non représentée.

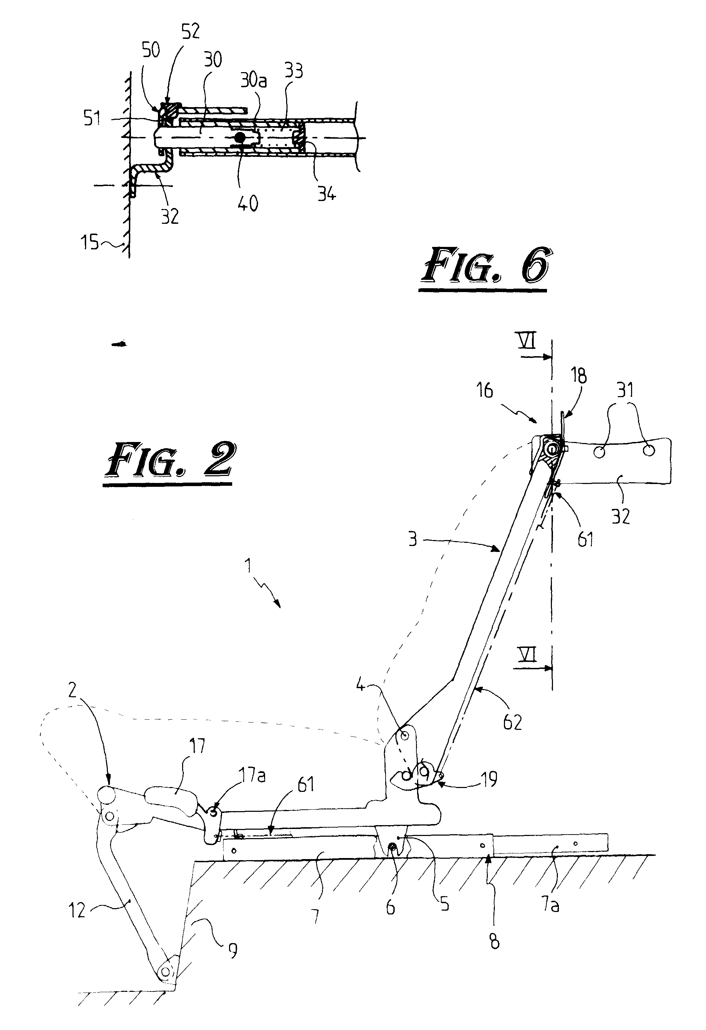

On conçoit alors que lorsque l'utilisateur manoeuvre le levier de commande 17, il provoque une traction du câble 61 ce qui entraîne en rotation le loquet 18 autour de son axe 45 ainsi que le déplacement du doigt de verrouillage 30 vers l'intérieur de l'armature du dossier 3 par coopération de l'axe 40 avec la biellette 41. Par voie de conséquence, le déverrouillage du siège 1 est réalisé, l'utilisateur peut alors régler son siège longitudinalement, comme visible sur la figure 2, représentant la position extrême avant, le verrouillage du haut de dossier 3 s'effectue automatiquement sur l'une des positions voisines à la position d'origine lors du déplacement longitudinal de l'assise 2 assurant ainsi l'immobilisation du siège en position longitudinale.

Le déplacement de l'assise 2 sur les glissières 8 entraîne également un déplacement de la biellette 12. On notera que celle-ci à une orientation sensiblement verticale en position médiane de réglage longitudinale du siège.

Lorsque l'utilisateur désire rabattre le dossier 3 sur l'assise 2 celui-ci pousse le loquet 18 horizontalement, comme représenté sur la figure 5 par le flèche F, ce qui entraîne le déplacement du doigt de verrouillage 30 vers l'intérieur de l'armature, dégageant ainsi celui-ci du trou 31 dans lequel il est engagé. De plus, cette action a pour conséquence de faire pivoter le loquet 18 et d'exercer ainsi une traction sur le câble 62 relié au crochet 19. Ce dernier est alors libéré de l'axe 20, permettant ainsi à l'utilisateur de rabattre le dossier 3 sur l'assise 2.

On notera que dans le mode de réalisation décrit le réglage longitudinal est possible suivant trois positions, on comprend bien entendu que ce réglage peut être plus important, en réalisant dans le profil 32 un plus grand nombre d'orifices.

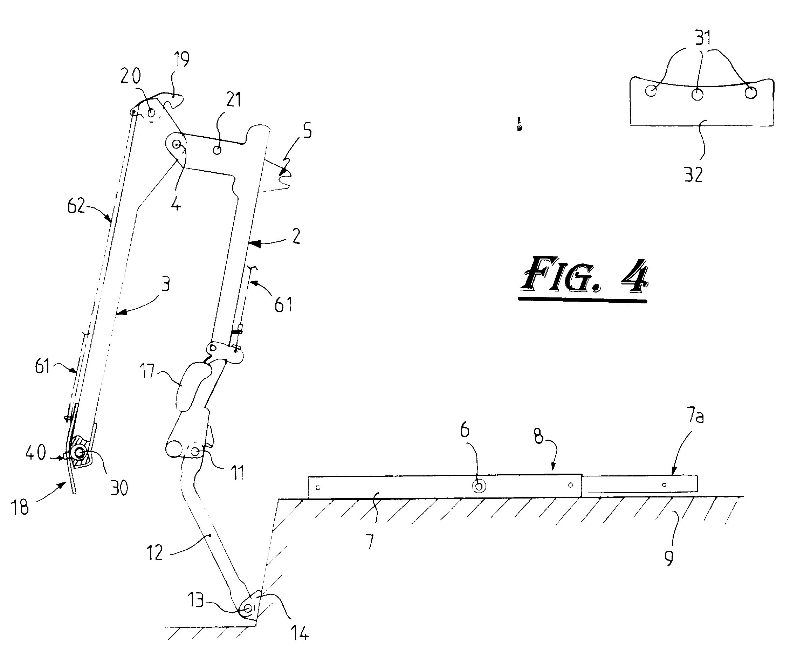

L'utilisateur peut également à partir d'une telle position, décrite ci-dessus, dégager l'assise 2 et le dossier 3 vers l'avant de manière à augmenter le volume du coffre (figure 4). Le dégagement des pieds de support arrière 5 des doigts 6 des glissières 8 s'effectue à partir d'une simple traction vers le haut. L'ensemble assise 2 et dossier 3 peut alors pivoter autour des axes d'articulation 11 et 13 de la biellette 12.

On notera qu'afin d'éviter tout déplacement intempestif des éléments mobile 7 des glissières 8 sur lequel reposent les pieds de support 5, lorsque le siège 1 est en position assise 2 et dossier 3 rabattue vers l'avant dit également "position portefeuille", un mécanisme d'immobilisation de l'élément mobile 7 par rapport à l'élément fixe 7a de la glissière 8 est activé lors de la sortie des pieds de support de cet élément mobile.

Ce mécanisme d'immobilisation est constitué par exemple d'un pion situé au voisinage du doigt ou anneau 6 et solidaire de l'élément fixe qui est apte d'une part à immobiliser l'élément fixe et d'autre part à s'éclipser lors de l'engagement des pieds de support sur le doigt ou anneau de l'élément mobile.

On comprend à la lecture de la description ci-dessus que le siège de la présente invention est relativement simple à réaliser et permet un réglage longitudinal de l'assise 2 tout en conservant l'utilisation d'armature peu coûteuse en ajoutant une fixation en haut de dossier permettant de résister aux chocs bagages.

Sans sortir du cadre de l'invention, des moyens d'ancrage et de verrouillage des pieds de support sur les doigts ou anneaux de l'élément mobile de la glissière peuvent être envisagés.

Bien que l'invention ait été décrite en liaison avec un mode de réalisation particulier elle comprend tous les équivalents techniques des moyens décrits.

## Revendications

1. Siège arrière réglable en position longitudinale dans un habitacle automobile, le siège (1) comportant une assise (2) et un dossier (3) articulé autour d'un axe transversal (4) sur cette assise (2), l'assise (2) étant montée de manière amovible sur des glissières (8) fixées au plancher (9), caractérisé en ce qu'il comporte d'une part un moyen de verrouillage (16) du haut de dossier (3) sur l'un des côtés de caisse (15) qui est désarmable sous l'action d'un levier de commande (17) porté par le siège (1), entre une position d'immobilisation du siège et escamotée de réglage en position longitudinale de celui-ci et d'autre part un moyen de verrouillage (19) de l'articulation (4) du dossier (3) par rapport à l'assise (2) qui est désarmable sous l'action d'un loquet (18) porté par le dossier, entre une position active d'immobilisation du siège et de l'articulation et escamotée de rabattement de ce dossier (3) sur l'assise (2).

2. Siège selon la revendication 1, caractérisé en ce que les moyens de verrouillage (16) du haut de dossier se verrouillent automatiquement sur l'une des positions voisines à la position d'origine lors du déplacement longitudinal de l'assise (2).

3. Siège selon la revendication 2, caractérisé en ce que le moyen de verrouillage de l'articulation est constitué d'un crochet (19) articulé autour d'un axe transversal (20) situé à la base du dossier (3) et solidaire de ce dernier, qui est conformé pour coopérer avec un axe transversal (21) solidaire de l'armature de l'assise (2) et situé au voisinage de l'axe d'articulation (4).

4. Siège selon l'une quelconque des revendications précédentes, caractérisé en ce que le moyen de verrouillage (16) du haut de dossier (3) est constitué d'un doigt transversal (30) monté mobile en translation horizontale dans la partie supérieure de l'armature du dossier (3) qui est apte à s'engager dans des orifices (31) régulièrement répartis suivant un axe longitudinal (Q), sur un profil (32) fixé sur l'un des côtés de caisse.

5. Siège selon la revendication 4, caractérisé en ce que le doigt (30) est rendu solidaire du loquet (18) par l'intermédiaire d'un axe (40) traversant ledit doigt (30) perpendiculairement à l'axe longitudinal de ce dernier qui coopère avec ledit loquet (18).

6. Siège selon la revendication 5, caractérisé en ce que le moyen de verrouillage (16) du haut de dossier est pourvu d'une chape (50) destinée à enserrer le profil (32) en position d'immobilisation du siège (1).

7. Siège selon l'une quelconque des revendications précédentes, caractérisé en ce que le loquet (18) est articulé sur le dossier (3) et est relié respectivement par un câble (61 et 62) au levier de commande (17) et au crochet (19) de verrouillage de l'articulation (4) du dossier (3) sur l'assise (2).

8. Siège selon l'une quelconque des revendications précédentes, caractérisé en ce que l'assise (2) comporte d'une part, deux pieds de support arrière (5) qui sont conformés pour se fixer sur un doigt ou anneau (6) solidaire d'un élément mobile (7) d'une glissière (8) fixée au plancher (9), et d'autre part, porte, sous sa partie avant, au moins une partie saillante (10) articulée sur un axe transversal (11) porté par une extrémité d'une biellette (12) articulée sur un axe transversal (13) porté par une chape (14) solidaire du plancher (9).

9. Siège selon la revendication 8, caractérisé en ce que les glissières (8) sont pourvues d'un mécanisme d'immobilisation de l'élément mobile (7) par rapport à l'élément fixe (7a) de la glissière qui est éclipsable lors de l'engagement des pieds de support (5) de l'assise (2) sur le doigt ou anneau (6).
